# FASCICULE DE BREVET EUROPEEN

(11) **EP 3 524 476 B1**
(45) Date de publication et mention de la délivrance du brevet: **01.06.2022**
(21) Numéro de dépôt: 19155557.2
(22) Date de dépôt: 05.02.2019
(51) Int. Cl.: B60R 5/00, B60R 21/02

(54) **DISPOSITIF DE CLOISONNEMENT POUR VEHICULE**
ABSCHIRMUNGSVORRICHTUNG FÜR FAHRZEUG
PARTITIONING DEVICE FOR A VEHICLE

(30) Priorité: 07.02.2018 IN 201811004591; 29.03.2018 FR 1852714
(43) Date de publication de la demande: 14.08.2019
(73) Titulaire: Renault s.a.s, 92100 Boulogne Billancourt (FR)
(72) Inventeur: DA CRUZ, Frederic, 78950 GAMBAIS (FR); GUNASEKARAN, Vishnu, Erode Tamil Nadu (IN)
(74) Mandataire: Renault Group

(56) Documents cités:
- EP-A1- 2 913 231
- DE-A1-102012 022 809
- FR-A1- 3 035 627
- FR-A1- 3 051 416

## Description

La présente invention est du domaine du dispositif de cloisonnement embarqué dans une automobile notamment un véhicule de type utilitaire.

L'invention concerne un dispositif de cloisonnement comportant un système d'articulation liant une cloison mobile à une structure de caisse d'un véhicule, la cloison mobile étant apte à passer d'une position déployée de séparation d'un habitacle d'un compartiment de chargement à une position de cloisonnement de l'habitacle afin d'augmenter l'espace de chargement en utilisation une partie de l'habitacle.

Un véhicule utilitaire doit répondre à des contraintes diverses et variées, parfois même antagonistes, comme le transport de passagers et le chargement d'objets volumineux dans un environnement limité, ce qui nécessite un aménagement spécifique de ses moyens de cloisonnement interne.

Il est connu d'utiliser une cloison de séparation entre l'habitacle et le compartiment de chargement. Une telle cloison permet avantageusement de sécuriser le conducteur lors d'un accident. Il est connu d'utiliser une cloison pleine, pouvant être par exemple issue d'un moulage d'une matière plastique. Afin d'augmenter l'espace de chargement, la partie dédiée au transport d'au moins un passager peut être rendue accessible depuis le compartiment de chargement. Pour ce faire, il peut être envisagé qu'une trappe d'accès soit réalisée selon une découpe de la cloison de séparation. Bien souvent, une telle trappe est disposée en partie inférieure de la cloison de séparation de sorte que, dans sa position d'ouverture, des objets peuvent s'étendre depuis le compartiment de chargement jusqu'au tablier avant en passant au-dessous d'un siège passager configuré à cet effet.

Certains utilisateurs, bien souvent des professionnels, souhaitent que l'accès soit plus important afin de loger verticalement des objets dans l'espace de l'habitacle destiné au transport de passagers lorsque ce dernier est resté libre.

L'une des solutions répondant à ce besoin consiste à utiliser une cloison amovible de séparation qui puisse être positionnée dans une position déployée et dans une position de séparation de l'habitacle. Dans sa position déployée, la cloison amovible s'étend sensiblement au prolongement de la cloison fixe de telle sorte que l'ensemble forme alors des moyens de séparation totale entre le compartiment de chargement et l'habitacle. Dans sa position de cloisonnement de l'habitacle, ce qui permettrait d'allouer une partie de l'habitacle au chargement, la cloison amovible s'étendrait approximativement de manière perpendiculaire à la cloison fixe, c'est-à-dire parallèlement à la direction longitudinale du véhicule, comme cela est décrit dans le document FR3051416-A1. EP2913231A montre un dispositif de protection pour des sièges conducteur et passager(s) comprenant chacun une paire de brancards d'assise montée en translation sur une paire de glissières solidarisée à un plancher d'un véhicule utilitaire, ledit dispositif comprenant deux cloisons de protection destinées à être installées respectivement derrière lesdits sièges conducteur et passager(s). FR3035627 montre une dispositif de cloisonnement pour véhicule selon le préambule de la revendication 1.

Un inconvénient relevé à ce type de solution réside dans l'occultation par la cloison amovible du champ de vision du conducteur, plus particulièrement sa rétrovision par un rétroviseur extérieur, lorsque la cloison est dans sa position de cloisonnement de l'habitacle.

Le but de l'invention est de fournir un dispositif de cloisonnement pour véhicule comportant un système d'articulation liant une cloison mobile à une structure de caisse d'un véhicule, le système d'articulation permettant à la cloison mobile de prendre une position déployée dans laquelle elle est apte à séparer un compartiment de chargement d'un habitacle, et une position de cloisonnement de l'habitacle dans laquelle elle est apte à créer une ouverture d'accès à l'habitacle.

Le dispositif de cloisonnement de l'invention avec les caractéristiques de la revendication 1 est remarquable par son système d'articulation qui comprend au moins une liaison pivot rendant apte le déplacement angulaire vers l'avant de la cloison mobile autour d'un axe vertical de telle sorte que l'ouverture d'accès à l'habitacle obtenue par la cloison mobile en position de cloisonnement de l'habitacle s'étend approximativement sur toute la hauteur du compartiment de chargement. Cela permet de réaliser un dispositif de cloisonnement qui soit simple à utiliser, fiable et offrant la possibilité d'aménagement intérieur sans nuire à la sécurité du conducteur notamment par une occultation même partielle de sa rétrovision.

Le dispositif de cloisonnement de l'invention comprend les caractéristiques suivantes, prises séparément ou en combinaison entre elles :
- la liaison pivot et la liaison glissière sont liées l'une à l'autre par des modules d'assemblage agencés respectivement entre une partie d'extrémité inférieure de la cloison mobile et le plancher, ainsi qu'entre une partie d'extrémité supérieure de la cloison mobile et le toit ;
- les modules supérieur et inférieur d'assemblage sont disposés verticalement l'un au regard de l'autre ; le rail de guidage comportant une butée de fin de course contre laquelle le patin est apte à venir en appui ;
- le système d'articulation rend apte l'agencement de la cloison mobile en position déployée perpendiculairement au droit de chacun des rails de guidage et en position de séparation de l'habitacle, parallèlement à chacun des rails de guidage, selon une position de recul afin de s'étendre sensiblement en saillie hors du rail de guidage ;
- la cloison mobile comprend un cadre tubulaire, par exemple de type mécano-soudé.

L'invention concerne également un véhicule avec les caractéristiques de la revendication 7 comportant un compartiment de chargement jouxtant un habitacle, le véhicule comprenant un dispositif de cloisonnement conforme aux caractéristiques susmentionnées, la cloison mobile étant en position de cloisonnement de l'habitacle en relation mécanique avec un siège pliable qui comprend une patte de support et/ou un réceptacle d'accueil pour un dispositif de verrouillage embarqué sur la cloison mobile.

Ces objets, caractéristiques et avantages de la présente invention seront exposés en détail dans la description suivante d'un mode de réalisation particulier d'un dispositif de cloisonnement fait à titre non-limitatif en relation avec les figures jointes parmi lesquelles :
- la figure 1 est une vue schématique d'une partie en coupe transversale d'un véhicule, selon l'invention,
- la figure 2 est une vue schématique du véhicule de la figure 1 dans lequel une cloison mobile est en position de séparation de l'habitacle, selon l'invention,
- la figure 3 est une vue schématique en perspective d'éléments du véhicule de la figure 2, la cloison mobile étant en interaction avec certains d'entre ces éléments, selon l'invention,
- la figure 4 est un agrandissement de la figure 3 selon une vue de dessus de la cloison mobile, selon l'invention,
- les figures 5 et 6 sont des agrandissements d'une zone A de la figure 1 représentant un système d'articulation située en partie inférieure de la cloison mobile en position déployée, vue en perspective respectivement de trois quart avant et de trois quart arrière.

Sur l'ensemble des figures, un repère orthonormé lié au véhicule est donné de telle sorte que l'axe transversal Y s'étend de la droite vers la gauche du véhicule, l'axe vertical Z s'étend du bas vers le haut, l'axe longitudinal X étant donné selon un sens normal de déplacement du véhicule et de l'avant vers l'arrière. Les termes « haut » et « bas » ou « supérieur » et « inférieur » se rapportent à une orientation d'axe vertical Z. Pour ne pas alourdir les figures, les références numériques ne sont pas reproduites sur toutes les figures illustrant un dispositif de cloisonnement.

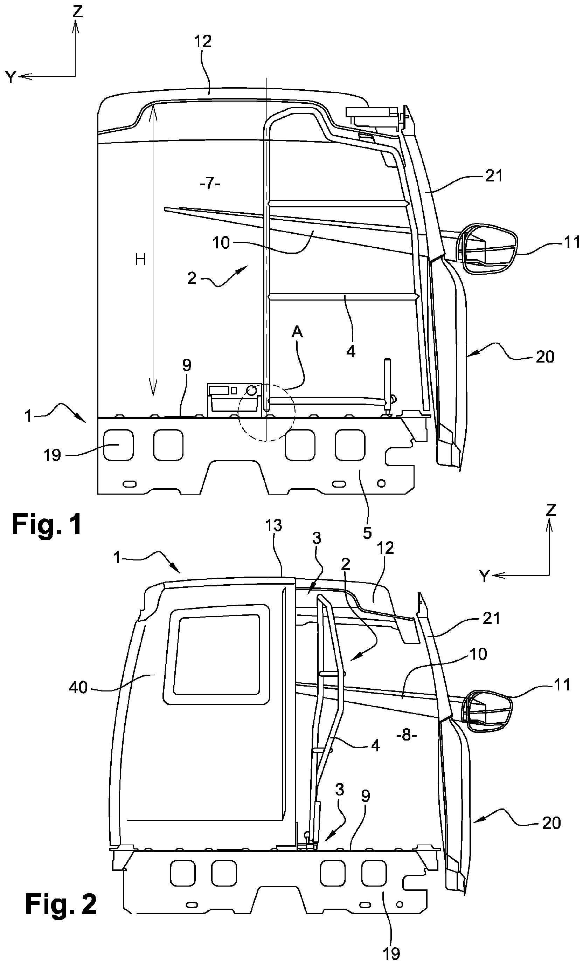

La figure 1 illustre de manière schématique et partielle un habitacle 7 d'un véhicule 1, qui est délimité en partie supérieure par une garniture 12 de toit 13, en partie inférieure par un plancher 9 et en partie latérale par une porte 20 ou un côté de caisse. Cette dernière comprend un vitrage 21 et un moyen 11 de rétrovision extérieure. Le cône 10 est une illustration d'un champ de vision d'un conducteur devant être libre de tout obstacle afin de lui permettre une rétrovision totale par l'utilisation du rétroviseur 11.

Sur la figure 1, une cloison mobile 4 est représentée dans une position déployée, c'est-à-dire qu'elle forme une barrière visant à empêcher le déplacement d'un obstacle vers la totalité de l'habitacle 7.

Sur la figure 2, une cloison fixe 13 est représentée afin de protéger le conducteur. Une telle cloison fixe 13 est par exemple réalisée en matière plastique ou composite avec par exemple une fibre de verre, et occupe approximativement la moitié d'une ouverture totale entre un compartiment de chargement 6 et l'habitacle 7. Avec le dispositif de cloisonnement de l'invention, une ouverture 8 permet un accès partiel à l'habitacle. Cette ouverture 8 est rendue libre lorsque la cloison mobile 4 est en position de cloisonnement de l'habitacle comme cela est représenté aux figures 2 à 4. A contrario, l'accès à l'habitacle 7 depuis le compartiment de chargement 6 est bloqué lorsque la cloison mobile 4 s'étend transversalement au véhicule, sensiblement au prolongement de la cloison fixe 40.

La cloison mobile 4 est liée à la structure de caisse 5 du véhicule par un système d'articulation 3 lui permettant de passer d'une position déployée (figures 1, 5 et 6) à une position de cloisonnement de l'habitacle (figures 2 à 4) dans laquelle elle s'étend dans l'habitacle 7, jouxtant alors le siège conducteur (non représenté). A titre d'exemple, une console centrale 14 est alors agencée entre la cloison mobile 4 en position de cloisonnement de l'habitacle et le siège conducteur.

Le système d'articulation 4 permet une rotation de la cloison mobile 4 autour d'un axe vertical Z. Pour rendre possible une telle cinématique, le siège passager doit ici être préalablement rabattu. Pour ce faire, l'assise 15 est basculée dans une cave à pied par un moyen de déplacement approprié, par exemple avec un jeu de bielles d'articulation liant l'assise à un flasque de siège liant ce dernier au plancher, tandis que le dossier 16 est rabattu selon un basculement à rotation d'un angle de 90° environ, par exemple via un axe d'articulation transversal reliant entre eux des flasques longitudinaux de siège. Le siège ainsi en position rabattue derrière une traverse 19 de la structure 5 de caisse, laquelle créé un dénivelé en Z entre le plancher 9 du compartiment de chargement 6 et le plancher de l'habitacle 7, permet au siège rabattu de venir au prolongement du plancher 9, ce qui agrandit la possibilité de chargement sur une surface sensiblement plane depuis l'arrière du véhicule jusqu'au tablier séparant l'habitacle du compartiment moteur. Avantageusement, dans la position rabattue du siège, l'assise 15 est sensiblement disposée au prolongement du dossier 16 de sorte que tant l'assise 15 que le dossier 16 peuvent être également utilisés en tant qu'éléments situés au prolongement longitudinal du plancher 9.

Le système d'articulation 3 permet un déplacement angulaire de la cloison mobile autour d'un axe vertical de telle sorte que l'ouverture d'accès 8 à l'habitacle obtenue par la cloison mobile en position de cloisonnement de l'habitacle s'étend approximativement sur toute la hauteur H du compartiment de chargement. Cela est rendu possible par une conception du véhicule tenant compte à la fois des géométries de la cloison mobile 4, du compartiment de chargement 6 et de l'habitacle 7.

Par conséquent, la cloison mobile 4 en position de cloisonnement de l'habitacle s'étend verticalement au droit du siège passager et de la garniture 12 de pavillon. La cloison mobile 4 en position déployée s'étend verticalement au droit du plancher 9 et de la partie arrière de la garniture 12 de toit comme cela est rendu visible sur la figure 1. Afin de rendre la cloison mobile 4 proche de la garniture 12 de toit 13, elle comprend en sa partie supérieure, un tube cintré tenant compte de la forme particulière de la garniture 12.

Compte tenu du fait qu'une simple rotation de la cloison mobile 4 vers sa position de cloisonnement de l'habitacle engendrerait une occultation du champ 10 de rétrovision du conducteur, le système d'articulation 3 comprend au moins une liaison glissière 32 rendant apte le déplacement longitudinal de la cloison mobile 4 en concomitance de sa rotation autour de l'axe vertical. Chaque liaison glissière 32 est alors réalisée par un rail de guidage monté solidairement à la structure 5 de caisse. Afin de créer un tel mouvement combiné, le dispositif de cloisonnement comprend un module d'assemblage 33 qui sera détaillé par la suite.

Préférentiellement, la liaison glissière 32 permettant de créer le déplacement longitudinal de la cloison mobile 4 durant sa rotation, comprend un rail de guidage, par exemple de type profilé de section transversale sensiblement en U pivoté à 90°. Une partie inférieure de la cloison mobile 4 est liée à un rail de guidage monté solidairement au plancher 9. Une partie supérieure de la cloison mobile 4 est également mise en relation avec un rail de guidage de forme sensiblement identique au rail de guidage tant par sa forme que sa disposition, à ceci près qu'il est agencé au niveau du pavillon de toit, par exemple sur une traverse de liaison des côtés latéraux de caisse.

Compte tenu des similitudes de conception entre ces moyens formant ledit système d'articulation 3 positionné en partie sur le plancher et en partie sur le toit, seules les caractéristiques du système d'articulation 3 agencé sur le plancher seront détaillées par la suite, sachant de ces mêmes caractéristiques concernent le système d'articulation 3 agencé sur le toit pour mettre en relation la partie sommitale de la cloison mobile 4 avec la structure 5 de caisse du véhicule.

Le rail de guidage est agencé approximativement en partie médiane du compartiment de chargement 6, par exemple en jouxtant la cloison 40. Le rail de guidage peut servir de butée transversale contre laquelle la cloison 40 est susceptible de venir en appui lors de son montage sur la structure de caisse.

Compte tenu de sa section en U, l'ouverture linéaire du profilé formant ledit rail de guidage s'étend latéralement pour rendre apte le positionnement d'un module d'assemblage 33 liant mécaniquement la cloison mobile 4 à la structure 5 de caisse. Un tel module d'assemblage 33 comprend une bielle 34 de rotation et une seconde bielle 35 de coulissement.

La bielle 34 de rotation comprend à l'une de ses extrémités une ouverture au travers de laquelle est monté à rotation un pion vertical (non représenté) solidaire d'une partie d'extrémité avant du rail de guidage. A titre d'exemple, le pion vertical lie solidairement entre eux les branches opposées du profilé en U formant le rail de guidage. L'autre extrémité de la bielle 34 de rotation est montée à rotation sur la cloison mobile, par rapport à un axe sensiblement parallèle à l'axe d'orientation du pion vertical. Le montage de la bielle 34 à la cloison mobile 4 est préférentiellement réalisé par l'intermédiaire d'une interface de connexion 36 montée sur la cloison mobile de manière réversible, par exemple par vissage. Cette même interface de connexion 36 peut également permettre de lier mécaniquement la seconde bielle 35 de coulissement à la cloison mobile 4, comme cela sera détaillé par la suite.

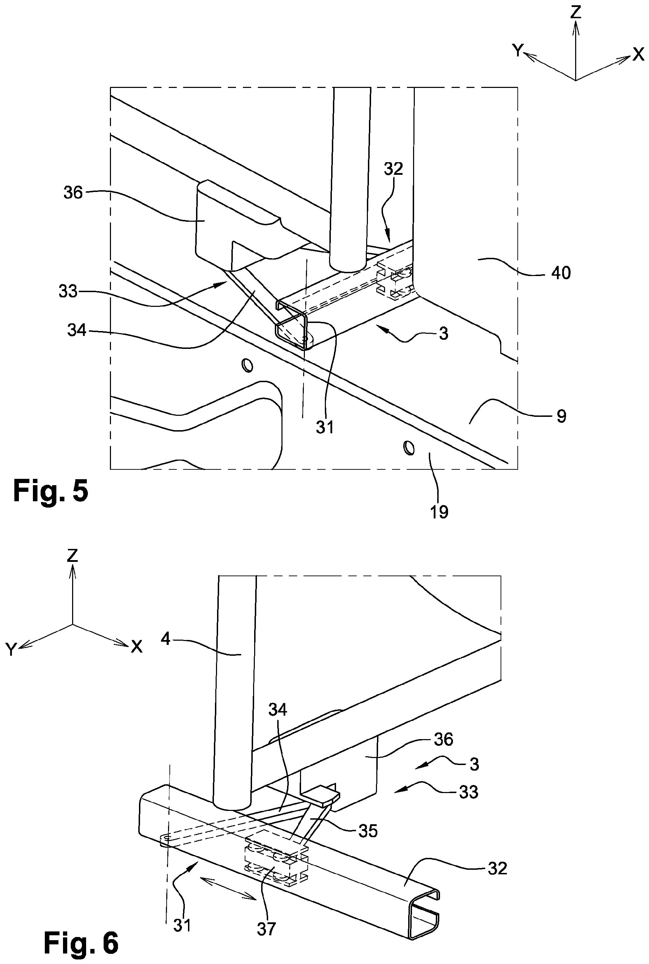

Une telle interface de connexion 36, visible sur les figures 5 et 6, comprend les axes autour desquels la bielle 34 et la seconde bielle 35 sont montées à rotation.

L'autre extrémité de la seconde bielle 35 est liée à coulissement au rail de guidage via un patin 37 de glissement qui est de forme sensiblement complémentaire à la section transversale du rail de guidage, au jeu de montage près pour assurer le coulissement approprié de la seconde bielle 35. Le patin 37 de glissement comprend également un arbre de rotation d'axe vertical autour duquel la seconde bielle 35 est montée libre à rotation.

Le dispositif de cloisonnement comprend préférentiellement des modules supérieur et inférieur d'assemblage 33 qui sont disposés verticalement l'un au regard de l'autre. La liaison pivot 31 et la liaison glissière 32 sont liées l'une à l'autre par un module d'assemblage 33 agencé entre une partie d'extrémité inférieure de la cloison mobile 4 et le plancher 6. La liaison pivot 31 et la liaison glissière 32 sont aussi liées l'une à l'autre par un module d'assemblage 33 agencé entre une partie d'extrémité supérieure de la cloison mobile et le toit 13.

Le rail de guidage peut comprendre une butée de fin de course contre laquelle le patin 37 de glissement est apte à venir en appui ce qui tend à limiter à la fois la course longitudinale et l'amplitude angulaire de rotation de la cloison mobile 4 par rapport à la structure 5 de caisse.

Selon une variante, la butée de fin de course comprend un moyen de retenue visant à immobiliser le patin de glissement à la butée. Il peut s'agir d'une butée comprenant un ergot déformable formant point dur s'opposant au déplacement axial du patin 37, qu'il convient de franchir pour libérer le patin 37 à coulissement le long du rail de guidage.

Dans sa position déployée, la cloison mobile 4 s'étend perpendiculairement au droit de chacun des rails de guidage, le patin 37 de glissement étant axialement rapproché du pion d'articulation formant la liaison pivot 31.

Dans sa position de séparation de l'habitacle, la cloison mobile 4 s'étend parallèlement à chacun des rails de guidage, selon une position de recul en X de telle sorte que la cloison mobile s'étend sensiblement en saillie longitudinale hors du rail de guidage. Un tel recul permet à la cloison mobile 4 de ne pas entraver le champ 10 de rétrovision du conducteur tout en procurant une zone 8 de chargement additionnelle à celle offerte par le compartiment 6 de chargement.

Un tel dispositif de cloisonnement est de conception simple dans sa mise en œuvre. La cloison mobile 4 comprend par exemple un cadre tubulaire qui peut être de type mécano-soudé. Cela permet de créer, par exemple cintrage, un cadre épousant les formes particulières du toit du véhicule, ce qui est nécessaire pour le changement de configuration de la cloison mobile 4 entre la position déployée et celle de séparation de l'habitacle.

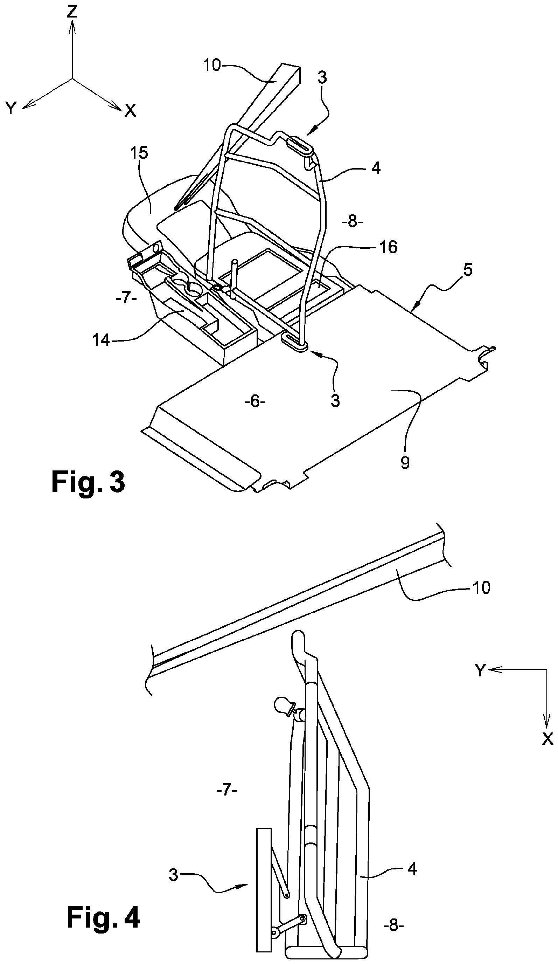

Les moyens de liaison de la cloison mobile à la structure 5 de caisse permettent d'augmenter la zone de chargement, voire de permettre un chargement jusqu'au tablier avant, en condamnant le siège passager. Pour rendre une telle configuration de transport possible, il convient au préalable d'opérer un basculement du siège passager, comme cela est par exemple représenté en figure 3. Alors que l'assise 15 de siège passager est disposée dans sa position de basculement contre la cave à pied avant qui est délimitée par le plancher d'habitacle, le dossier 16 de siège pouvant alors être basculé vers l'avant selon un mouvement de rotation d'environ 90° autour d'un axe transversal. L'arrière du dossier 16 de siège passager peut ainsi être disposé approximativement au prolongement du plancher 9 du compartiment de chargement 6.

Dans une telle configuration du siège passager, l'utilisateur peut procéder au déplacement de la cloison mobile 4, de sa position déployée vers sa position de cloisonnement de l'habitacle. Sur les figures 3 et 4 représentant la cloison mobile 4 dans sa position de cloisonnement de l'habitacle, il est créé une ouverture 8 permettant une communication entre la partie d'habitacle cloisonné et le compartiment de chargement 9. L'ouverture 8 s'étend transversalement depuis un bord latéral de la cloison fixe 40 et la structure 5 de caisse délimitant le plancher 9, le toit 13 et un côté de caisse ou une porte latérale 20. Du fait du retrait vers l'arrière de la cloison mobile 4, le rétroviseur 11 extérieur est rendu visible au travers du vitrage 21 transparent de porte 20. Le champ 10 de rétrovision passe devant la cloison mobile 4.

La cloison mobile 4 jouxte alors une console centrale 14 à côté de laquelle est disposé le siège passager. La cloison mobile 4 vient en contact contre un flasque intérieur de siège passager qui peut comprendre à cet effet une patte de support contre laquelle la partie inférieur de la cloison mobile 4 peut venir en appui. La cloison mobile 4 peut également comprendre un dispositif de verrouillage (non représenté) visant à immobilier la cloison mobile 4 au siège passager. Dans sa position de cloisonnement de l'habitacle, le siège passager dans sa position pliée peut comprendre un réceptacle d'accueil ménagé sur son armature et destiné à coopérer avec un dispositif de verrouillage embarqué sur la cloison mobile 4, lequel peut être du type d'une tige mobile à translation verticale montée sur la cloison mobile 4. Ce dispositif de verrouillage vient en complément de la butée qui peut être comprise dans le rail de guidage pour s'opposer au déplacement axial du patin 37 de glissement.

Le véhicule est apte à passer d'une configuration de volume de chargement augmenté à une configuration de volume de chargement normal par un déplacement de la cloison mobile 4 vers sa position déployée. Pour ce faire, le dispositif de verrouillage doit être préalablement libéré, ce qui permet une rotation vers l'arrière de la cloison mobile 4, ce qui tend à fermer l'ouverture 8. Le siège passager peut alors retrouver sa position d'utilisation normale.

Le véhicule comportant le dispositif 2 de cloisonnement de l'invention est remarquable en ce qu'il permet d'augmenter le volume de chargement tout en sécurisant le conducteur. En outre, malgré un volume de chargement augmenté, son champ de rétrovision n'est nullement altéré puisqu'il s'étend alors devant la cloison 4 en position de cloisonnement de l'habitacle.

## Revendications

1. Dispositif (2) de cloisonnement pour véhicule (1) comportant un système d'articulation (3) liant une cloison mobile (4) à une structure de caisse (5) d'un véhicule, le système d'articulation (3) permettant à la cloison mobile (4) de prendre une position déployée dans laquelle elle est apte à séparer un compartiment de chargement (6) d'un habitacle (7), et une position de cloisonnement de l'habitacle dans laquelle elle est apte à créer une ouverture d'accès (8) à l'habitacle, le système d'articulation (3) comprenant au moins une liaison pivot (31) rendant apte le déplacement angulaire vers l'avant de la cloison mobile autour d'un axe vertical de telle sorte que l'ouverture d'accès (8) à l'habitacle obtenue par la cloison mobile en position de cloisonnement de l'habitacle s'étend approximativement sur toute la hauteur (H) du compartiment de chargement, le système d'articulation (3) comprenant au moins une liaison glissière (32) rendant apte le déplacement longitudinal de la cloison mobile (4), chaque liaison glissière étant réalisée par un rail de guidage monté solidairement au plancher (9) du compartiment de chargement (6), **caractérisé en ce que** la liaison pivot et la liaison glissière (32) sont liées l'une à l'autre par un module d'assemblage (33) comprenant au moins une bielle (34) liée à rotation à l'axe vertical pour la liaison pivot, et une seconde bielle (35) liée à coulissement au rail de guidage, respectivement par l'une de leurs extrémités, le module d'assemblage (33) comprenant une interface de connexion (36) montée sur la cloison mobile (4) de manière réversible, l'autre des extrémités des bielles étant montées à rotation sur l'interface de connexion (36) et la seconde bielle (35) liée à coulissement au rail de guidage par l'une de ses extrémités comprenant un patin (37) de glissement.

2. Dispositif (2) selon la revendication 1, **caractérisé en ce que** la liaison pivot (31) et la liaison glissière (32) sont liées l'une à l'autre par des modules d'assemblage (33) agencés respectivement entre une partie d'extrémité inférieure de la cloison mobile (4) et le plancher (6), ainsi qu'entre une partie d'extrémité supérieure de la cloison mobile et le toit (13).

3. Dispositif (2) selon la revendication 2, **caractérisé en ce que** les modules supérieur et inférieur d'assemblage (33) sont disposés verticalement l'un au regard de l'autre.

4. Dispositif (2) selonl'une quelconque des revendications précédentes, **caractérisé en ce que** le rail de guidage comporte une butée de fin de course contre laquelle le patin (37) est apte à venir en appui.

5. Dispositif (2) selon la revendication 4, **caractérisé en ce que** le système d'articulation (3) rend apte l'agencement de la cloison mobile (4) en position déployée perpendiculairement au droit de chacun des rails de guidage et en position de cloisonnement de l'habitacle, parallèlement à chacun des rails de guidage, selon une position de recul afin de s'étendre sensiblement en saillie hors du rail de guidage.

6. Dispositif (2) selon l'une quelconque des revendications précédentes, **caractérisé en ce que** la cloison mobile (4) comprend un cadre tubulaire, par exemple de type mécano-soudé.

7. Véhicule comportant un compartiment de chargement (6) jouxtant un habitacle (7), **caractérisé en ce qu'**il comprenant un dispositif de cloisonnement (2) selon l'une des revendications 1 à 6, la cloison mobile étant en position de cloisonnement de l'habitacle en relation mécanique avec un siège pliable qui comprend une patte de support et/ou un réceptacle d'accueil pour un dispositif de verrouillage embarqué sur la cloison mobile (4).

## Patentansprüche

1. Abschirmungsvorrichtung (2) für ein Fahrzeug (1), umfassend ein Gelenksystem (3), das eine bewegliche Trennwand (4) mit einer Karosseriestruktur (5) eines Fahrzeugs verbindet, wobei das Gelenksystem (3) es der beweglichen Trennwand (4) ermöglicht, eine ausgefahrene Position, in der sie einen Laderaum (6) von einem Fahrgastraum (7) trennen kann, und eine Fahrgastraumabschirmungsposition, in der sie eine Zugangsöffnung (8) zum Fahrgastraum schaffen kann, einzunehmen, wobei das Gelenksystem (3) mindestens eine Schwenkverbindung (31) umfasst, die die Winkelverschiebung der beweglichen Trennwand um eine vertikale Achse nach vorn ermöglicht, so dass sich die Zugangsöffnung (8) zum Fahrgastraum, die durch die bewegliche Trennwand in der Fahrgastraumabschirmungsposition erhalten wird, etwa über die gesamte Höhe (H) des Laderaums erstreckt, wobei das Gelenksystem (3) mindestens eine Gleitverbindung (32) umfasst, die die Längsverschiebung der beweglichen Trennwand (4) ermöglicht, wobei jede Gleitverbindung durch eine Führungsschiene realisiert wird, die fest am Boden (9) des Laderaums (6) montiert ist, **dadurch gekennzeichnet, dass** die Schwenkverbindung und die Gleitverbindung (32) miteinander durch ein Verbindungsmodul (33) verbunden sind, das mindestens eine Verbindungsstange (34), die für die Schwenkverbindung drehbar mit der vertikalen Achse verbunden ist, und eine zweite Verbindungsstange (35), die gleitend mit der Führungsschiene verbunden ist, jeweils mit einem ihrer Enden, umfasst, wobei das Verbindungsmodul (33) eine Verbindungsschnittstelle (36) umfasst, die reversibel an der beweglichen Trennwand (4) montiert ist, wobei das andere Ende der Verbindungsstangen drehbar an der Verbindungsschnittstelle (36) montiert ist und die zweite Verbindungsstange (35), die mit einem ihrer Enden gleitend an der Führungsschiene montiert ist, einen Gleitschuh (37) umfasst.

2. Vorrichtung (2) nach Anspruch 1, **dadurch gekennzeichnet, dass** die Schwenkverbindung (31) und die Gleitverbindung (32) miteinander durch Verbindungsmodule (33) verbunden sind, die jeweils zwischen einem unteren Endteil der beweglichen Trennwand (4) und dem Boden (6) sowie zwischen einem oberen Endteil der beweglichen Trennwand und dem Dach (13) angeordnet sind.

3. Vorrichtung (2) nach Anspruch 2, **dadurch gekennzeichnet, dass** das obere und das untere Verbindungsmodul (33) vertikal zueinander angeordnet sind.

4. Vorrichtung (2) nach einem der vorangehenden Ansprüche, **dadurch gekennzeichnet, dass** die Führungsschiene einen Endanschlag aufweist, an dem der Gleitschuh (37) zur Anlage kommen kann.

5. Vorrichtung (2) nach Anspruch 4, **dadurch gekennzeichnet, dass** das Gelenksystem (3) die Anordnung der beweglichen Trennwand (4) in der ausgefahrenen Position senkrecht zu jeder der Führungsschienen und in der Fahrgastraumabschirmungsposition parallel zu jeder der Führungsschienen gemäß einer zurückgezogenen Position, in der sie sich im Wesentlichen aus der Führungsschiene herausragend erstreckt, ermöglicht.

6. Vorrichtung (2) nach einem der vorangehenden Ansprüche, **dadurch gekennzeichnet, dass** die bewegliche Trennwand (4) einen rohrförmigen Rahmen umfasst, beispielsweise vom mechanisch verschweißten Typ.

7. Fahrzeug mit einem Laderaum (6), der an einen Fahrgastraum (7) angrenzt, **dadurch gekennzeichnet, dass** es eine Abschirmungsvorrichtung (2) nach einem der Ansprüche 1 bis 6 umfasst, wobei die bewegliche Trennwand in der Fahrgastraumabschirmungsposition in mechanischer Beziehung zu einem umklappbaren Sitz steht, der eine Stützlasche und/oder eine Aufnahme für eine an der beweglichen Trennwand (4) angeordnete Verriegelungsvorrichtung umfasst.

## Claims

1. Partitioning device (2) for a vehicle (1), having an articulation system (3) connecting a mobile partition (4) to a body structure (5) of a vehicle, the articulation system (3) allowing the mobile partition (4) to adopt a deployed position in which it is able to separate a loading compartment (6) from a passenger compartment (7), and a position partitioning the passenger compartment in which it is able to create an opening (8) for accessing the passenger compartment, the articulation system (3) comprising at least one pivot connection (31) which permits the angular forward movement of the mobile partition about a vertical axis such that the opening (8) for accessing the passenger compartment that is obtained by the mobile partition in the position partitioning the passenger compartment extends approximately over the entire height (H) of the loading compartment, the articulation system (3) comprising at least one slide connection (32) which permits the longitudinal movement of the mobile partition (4), each slide connection being formed by a guide rail mounted securely on the floor (9) of the loading compartment (6), **characterized in that** the pivot connection and the slide connection (32) are connected to one another by an assembly module (33) comprising at least one link rod (34) connected so as to rotate relative to the vertical axis for the pivot connection, and a second link rod (35) which is connected so as to slide relative to the guide rail, in each case via one of their ends, the assembly module (33) comprising a connection interface (36) which is mounted reversibly on the mobile partition (4), the other one of the ends of the link rods being mounted so as to rotate on the connection interface (36) and the second link rod (35) which is connected so as to slide relative to the guide rail via one of its ends comprising a sliding runner (37) .

2. Device (2) according to Claim 1, **characterized in that** the pivot connection (31) and the slide connection (32) are connected to one another by assembly modules (33) which are arranged respectively between a lower end part of the mobile partition (4) and the floor (6), and between an upper end part of the mobile partition and the roof (13).

3. Device (2) according to Claim 2, **characterized in that** the upper and lower assembly modules (33) are disposed vertically with regard to one another.

4. Device (2) according to any one of the preceding claims, **characterized in that** the guide rail comprises an end-of-travel stop against which the runner (37) is able to butt.

5. Device (2) according to Claim 4, **characterized in that** the articulation system (3) permits the arrangement of the mobile partition (4) perpendicularly to each of the guide rails in the deployed position and parallel to each of the guide rails in the position partitioning the passenger compartment, in a moved-back position so as to project substantially out of the guide rail.

6. Device (2) according to any one of the preceding claims, **characterized in that** the mobile partition (4) comprises a tubular frame, for example of the mechanically welded type.

7. Vehicle having a loading compartment (6) adjoining a passenger compartment (7), **characterized in that** it comprises a partitioning device (2) according to one of Claims 1 to 6, the mobile partition being in the position partitioning the passenger compartment in a mechanical relationship with a foldable seat which comprises a support lug and/or a receptacle for receiving a locking device installed on the mobile partition (4).
